# EUROPEAN PATENT SPECIFICATION

(11) **EP 3 784 163 B1**
(45) Date of publication and mention of the grant of the patent: **07.12.2022**
(21) Application number: 19722392.8
(22) Date of filing: 19.04.2019
(51) Int. Cl.: A61C 1/00, A61C 5/42, A61C 1/08, A61C 1/14

(54) **DENTAL TOOL, DENTAL HANDPIECE AND DENTAL SYSTEM**
ZAHNÄRZTLICHES WERKZEUG, ZAHNÄRZTLICHES HANDSTÜCK UND ZAHNÄRZTLICHES SYSTEM
OUTIL DENTAIRE, PIÈCE À MAIN DENTAIRE ET SYSTÈME DENTAIRE

(30) Priority: 25.04.2018 US 201862662274 P
(43) Date of publication of application: 03.03.2021
(73) Proprietor: DENTSPLY SIRONA Inc., York, PA 17401 (US)
(72) Inventor: PFLEIDERER, Martin, 2012 Auvernier (CH); MANDERSCHEID, Moritz, 64291 Darmstadt (DE)
(74) Representative: Özer, Alpdeniz
(86) International application number: PCT/US2019/028229
(87) International publication number: WO 2019/209637

(56) References cited:
- EP-A1- 2 525 199
- US-A1- 2018 092 710

## Description

### FIELD OF THE INVENTION

The present application relates generally to an apparatus for endodontic treatment, and, more particularly, to a dental apparatus comprising a tool, drive unit, transponder and reader for non-contact communication between the tool and a complementary handpiece. The communication is achieved by Radio Frequency Identification (RFID) transponder (tag) and reader antennas having a planar multi-layer geometry and oriented orthogonally to the tool's axis of rotation to allow for information transfer at a plurality of rotational angles of the tool. Also discussed herein is a device and a method of using the dental apparatus.

### BACKGROUND OF THE INVENTION

Endodontic treatment is important when pulp, which is the soft tissue inside a root canal, becomes inflamed or infected. The inflammation or infection can be caused by deep decay, repeated dental procedures on the tooth or a crack or chip in the tooth. If pulp inflammation or infection is left untreated, it can cause pain or lead to an abscess. Root canal files used to remove pulp from root canals and files may vary in diameter. A dentist normally starts with the smaller size and gradually increases file diameter in order to keep the procedure non-invasive. After removing the infection and getting rid of the bacteria, the dentist can use files to clean, shape and obturate the root canal.

Accessing, scouting and shaping root canals require a plurality of different drills and files. Each of these may require a specific motor setting for an efficient and safe canal preparation.

EP1531750 discloses a dental drill comprising encodings which can be modified taking into account usage information for the dental drill and which can be stored as data storage elements. EP2233103 discloses a medical or dental handpiece having a coil for inductive energy and/or data exchange. EP1531750 and EP2233103 comprise wire antennas disposed around the tool shaft or a ferrite core and a concentrically positioned coiled reader antenna. EP2525199 discloses a medical, in particular dental, element for diagnosis or treatment. US2018092710A1 discloses an electronic tool recognition system for dental devices.

Microsensys transponder mic3^{®} shows an integrated unit of small height where the antenna wafer is directly bonded on the memory chip with the antenna structure being on one side of the silicon wafer only.

Scheduling to write usage data to the memory of a file or tool is difficult because it is not known when a user will eject the file or tool from a handpiece, thereby interrupting the communication between the handpiece and the file or tool.

Moreover, adding transponder and reader hardware to handpieces also necessitates additional spatial volume for the file as well as for the head of the contra-angle which holds the file. Increasing the size of the file and of the head of the contra-angle renders the tool's access to the crown of the tooth, in particular of a molar tooth, more challenging and further limits the dentist's view of the treatment site.

### SUMMARY OF THE INVENTION

The objective of the present invention has been achieved by the dental tool as defined in claim 1, and the dental handpiece as defined in claim 3, and the system as defined in claim 8. The dependent claims relate to further developments. Existing limitations associated with the foregoing, as well as other limitations, may be overcome by a dental apparatus comprising a tool, drive unit, transponder and reader for communication between the tool and a complementary handpiece, as well as by a method for using the apparatus. Herein an RFID transponder is attached to a coupling end of a dental tool and a reader antenna is attached to a tool facing part of a tool release button of a handpiece for communication. Through communication between the handpiece and the dental tool, the adjustment of motor settings based on the tool may be automated. Moreover the usage of each tool (for example, total working hours) may be automatically monitored to allow for timely replacement of the tool to avoid overuse and breakage of the tool.

According to an example embodiment herein, an RFID transponder is provided. The RFID transponder has a multilayer planar antenna which is attached to a coupling end of a dental tool. The RFID transponder communicates with a reader which also has a multi-layer planar antenna attached to a tool facing aspect of a tool release button of a handpiece. Both planar antennas are oriented orthogonally to an axis of rotation of the dental tool and the antennas are opposite each other with respect to the tool/file axis. In another embodiment herein, the transponder antenna and the reader antenna have silicon substrates and the reader antenna is attached to a tool release button made of a nonmagnetic material such as a polymer. The substrate may be a continuous substrate with no central opening. In another embodiment herein, each antenna comprises turns that are disposed on both sides of a silicon substrate, therefore increasing the total number of turns for the given antenna structure. The substrate may be bonded to a memory chip such as an EEPROM chip. In yet another embodiment herein, each antenna may comprise turns on two or more pieces of substrate. In another embodiment, the reader is a pen reader. In another embodiment, the reader is a table-top reader. In yet another embodiment, the reader is attached as an additional unit to an existing handpiece. In another embodiment, the reader is produced with or embedded in the handpiece.

According to an example embodiment herein, a dental apparatus is provided. The apparatus includes a dental tool and a corresponding handpiece in which the dental tool is inserted. In an embodiment, the apparatus includes a transponder and a reader constructed to exchange data through a contactless interface which is an inductive link. The transponder and reader have antennas wherein the transponder antenna or whole transponder is attached to a coupling end of the dental tool and the reader antenna is attached to a tool facing part of a push button of the handpiece. An end of the dental tool that engages with the handpiece may be constructed to have a round or half-moon shape. A push button may also be maintained in a defined angular position with a washer having a member for engaging the push button.

According to another example embodiment herein, a method for using a dental apparatus is provided. The method includes triggering a communication event by a signal strength change caused by reducing the distance between two antennas. In another embodiment, a method for reading the content of a memory chip on a tool handle through a sterile barrier packaging using a pen reader is disclosed.

The method may be useful for exchanging data between the dental tool/file and the handpiece or pen reader. The exchanged data may include static data unique to a tool such as unique file serial number and file type or dynamic data that may be updated during use of the apparatus such as duration of file use, speed or torque of file and complexity of the canal.

Further features and advantages, as well as the structure and operation of various embodiments herein, are described in detail below with reference to the accompanying drawings.

### BRIEF DESCRIPTION OF THE DRAWINGS

Example embodiments will become more fully understood from the detailed description given herein below and the accompanying drawings, wherein like elements are represented by like reference characters, which are given by way of illustration only and thus are not limitative of the example embodiments herein and wherein:
Fig. 1 illustrates a system diagram illustrating different portions of the dental apparatus.
Fig. 2 cross sectional view illustrating the head of a dental handpiece holding a file as well as a first antenna inside the tool release button and a transponder on the back end of the file.
Fig. 3 is a bottom view of the inside of the tool release button containing a first antenna on a rectangular substrate.
Fig. 4 is a top view of the back end of a file tool with the transponder having a planar printed antenna on a rectangular substrate. The transponder is disposed on a half-moon shaped back face of the file. It may be embedded into a shallow cavity on the end of the file.
Fig. 5 illustrates an antenna disposed on a silicon wafer with integrated antenna turns on both sides.
Fig. 6 illustrates a first antenna on a substrate having a regular hexagonal shape inside a push button.
Fig. 7 illustrates a second antenna on a substrate having an irregular shape on the end of a file handle with half-moon shaped cross-section.
Fig. 8 is an exploded view of an antenna having integrated turns on two silicon wafers that are bonded to each other.
Fig. 9 is a perspective view illustrating a washer for accommodating a cable and preventing rotation of the tool release button
Fig. 10 illustrates a file holder inside a sterile barrier bag for autoclaving and a handheld reader having a first integrated antenna coil/metal and reader electronics to communicate with the transponder on a file
Fig. 11 illustrates a reader with flat contact surface
Fig. 12 illustrates a reader with a concave contact surface
Fig. 13 is the view of a multi-file blister packaging inserted into a table-top reader having a first integrated antenna coil/metal and reader electronics to communicate with the transponder on the file.
Fig. 14 is the view of a table-top reader which may communicate with three files in parallel.
Fig. 15 illustrates a computer system of an example embodiment herein
Fig. 16 is a diagram illustrating the control of a motor of the handpiece.
Fig. 17 is another diagram illustrating the control of a motor of the handpiece.
Fig. 18 is a flow chart illustrating a method according to an embodiment herein.
Fig. 19 shows a push button according to an embodiment herein.
Fig. 20 shows a cross section of a transponder according to an embodiment herein
Fig. 21 shows another cross section of a transponder according to an embodiment herein.
Fig. 22 shows a dental tool according to an embodiment herein.
Fig. 23 is an embodiment herein showing a dental handpiece with a contra-angle and motor unit and an inductive link.

Different ones of the Figures may have at least some reference numerals that are the same in order to identify the same components, although a detailed description of each such component may not be provided below with respect to each Figure.

### DETAILED DESCRIPTION OF THE INVENTION

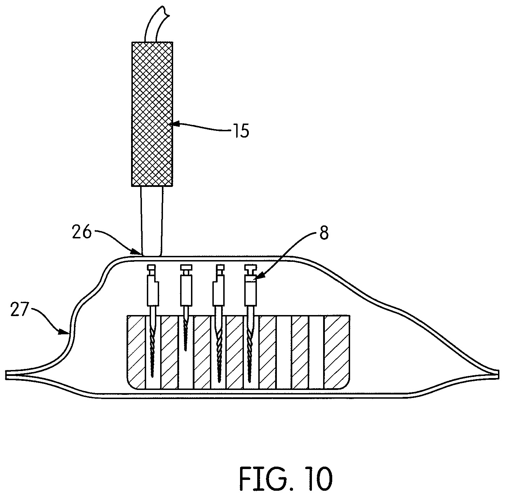

The embodiments as shown in Figures 10, 11, 12, 13, and 14 are outside the scope of the invention as claimed, and serve for better understanding the invention.

In accordance with example aspects described herein a device, apparatus and method are provided for enabling communication between a tool and a handpiece through a contactless interface while reducing space requirements for communication antennas of the apparatus.

### Transponder, Handpiece and Dental Apparatus

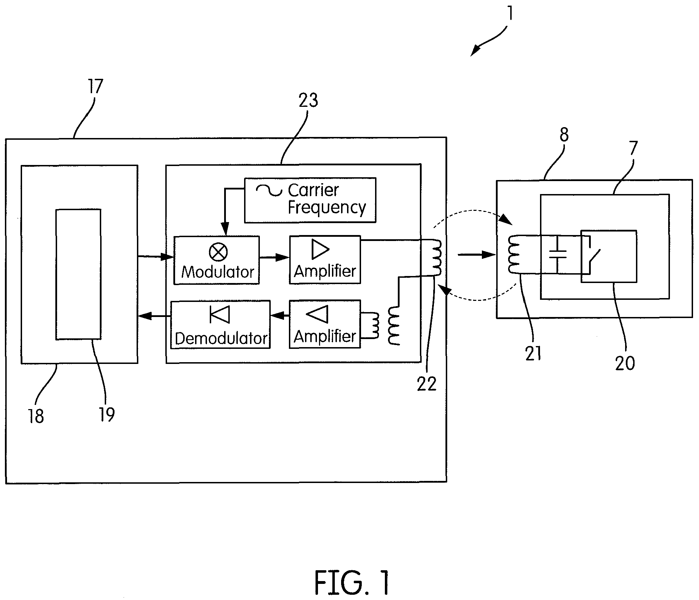

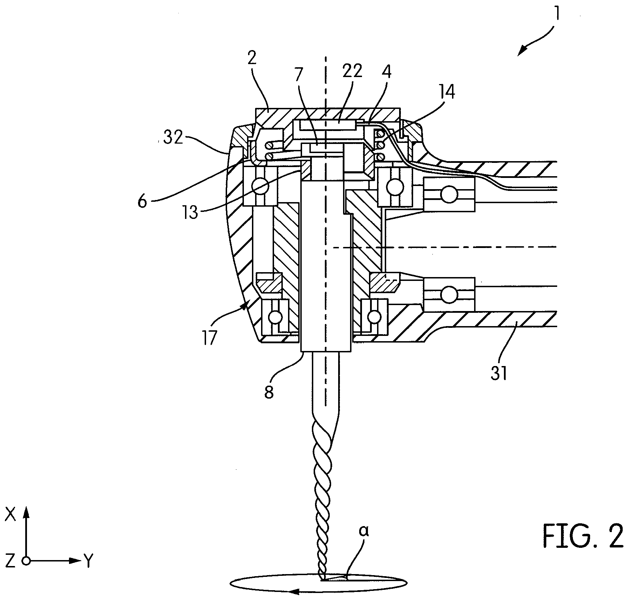

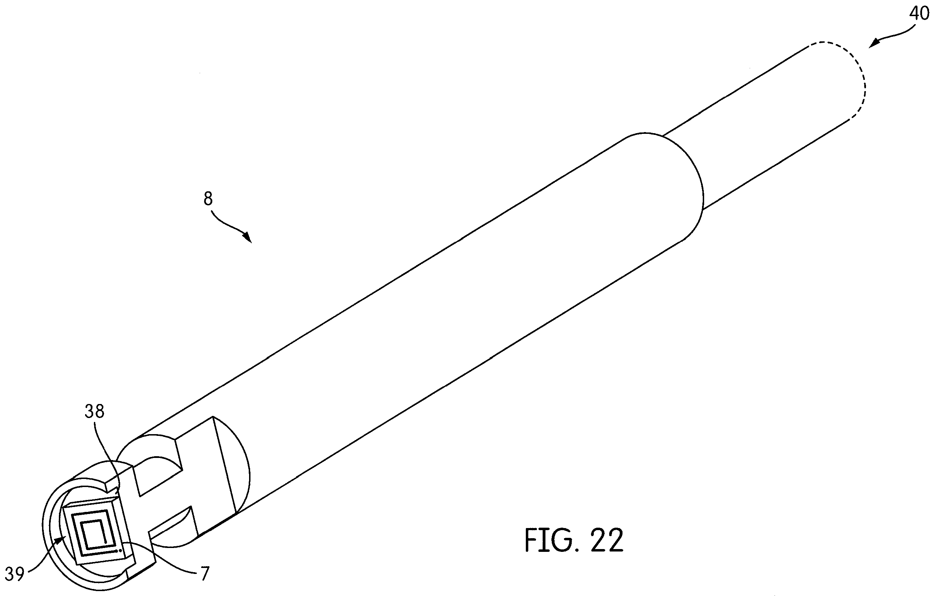

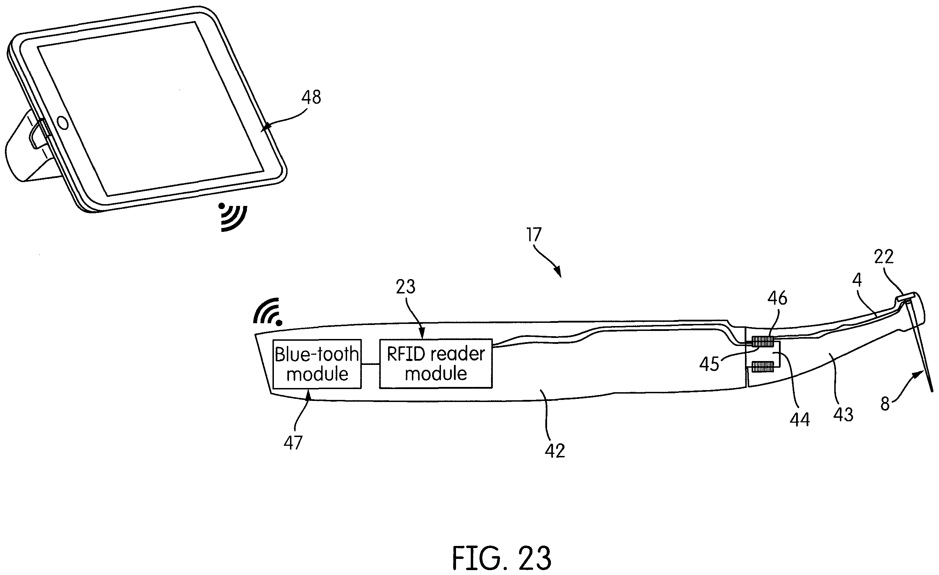

Fig. **1** illustrates a system block diagram of dental apparatus **1** used in endodontic procedures, and which may be constructed and operated in accordance with at least one example embodiment herein. The apparatus comprises a dental tool **8,** such as a file, and a handpiece **17.** Fig. 22 illustrates the dental tool having a proximal coupling end **39** and a distal treatment end **40** opposite the proximal coupling end **39.** The handpiece **17** (Fig. 2) has a head **32** and an outer housing **31.** The handpiece also has a drivable hollow shaft constructed to receive the proximal coupling end **39** of the dental tool **8,** the drivable hollow shaft being arranged in the head **32** and drivable relative to the outer housing **31** of the head **32** to move the dental tool **8.** A transponder **7** is attached to or integrated with the proximal coupling end **39** of the dental tool **8** as shown in Fig 1 and Fig. 22. The transponder **7** may be snapped, attached and/or bonded into a recess **38** at the proximal coupling end **39** of the tool **8.** The transponder **7** may comprise a memory **20** region such as a microchip, which is connected to a transponder antenna **21** (Fig. 2). The handpiece **17** may include a reader **23** which communicates with the transponder through a reader antenna **22.** The transponder antenna **21** and reader antenna **22** may face each other and may be oriented orthogonally to the dental tool's axis of rotation **X** to allow for information transfer at all rotational angles **α** of the tool. Preferably, transmission of data or energy may take place without any contact through a secure RF link, though not required. The transponder **7** may be a passive transponder which has no energy source and may therefore be maintenance free. Such a passive transponder may be activated by depressing the push button **2** to reduce the distance between the transponder antenna **21** and the reader antenna **22** which increases the signal strength between the two antennas. Pushing the push button **2** may also trigger writing on a memory chip **20** of the transponder before the tool **8** is released from the handpiece **17.** The reader **23** may control the routine for communication with the transponder through different function and logic components such as is shown in Fig. **1****.** A modulator **49** may be used to modulate a carrier frequency with signal data for amplification and transmission to the transponder **7.** Data from the transponder **7** may also be received by a reader antenna **22** and transmitted through a transmission means such as a cable **4** or wirelessly, for further processing by the reader circuitry and/or a processor **19** of a digital unit/controller **18.** An external data interface may also transmit the data for analysis and further processing by an external computer system such as an iPad (Fig. 23). In an embodiment, the handpiece may be a cordless handpiece. In another embodiment, the handpiece **17** has a housing made from polymer material. The handpiece may further comprise a controller **18,** a rechargeable battery (no shown), a power electronic device (not shown), and a motor **33.** In an example embodiment herein, the transponder may be configure to be of a small size and fits within the ISO standardized diameter of a file handle (**2.35**mm), though other sizes are contemplated. In another embodiment the integrated turns of the transponder antenna and reader antenna are embedded in polymer material to ensure protection from fluids and to provide a di-electric gap from adjacent metal components of the dental apparatus. The whole transponder may also be embedded in polymer material.

In one embodiment herein, the transponder 7 may have a multi-layer planar antenna **21** or the whole transponder **7** attached to the coupling end of a dental tool **8.** The reader **23** may also have a multilayer planar antenna **22** attached to the tool facing portion of a push button **2** of the handpiece. Herein, both planar multilayer antennas may be oriented orthogonally to the axis of rotation **X** of the tool **8** such that no further alignment between the antennas is necessary, for all rotational angles **α** of the tool **8,** to initiate communication or transmit data between the two antennas.

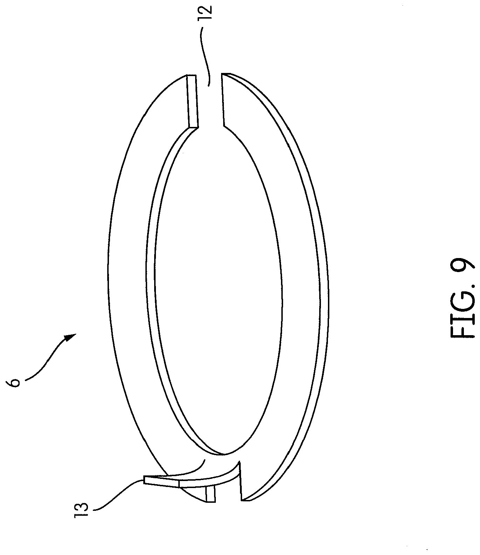

Fig. **1** and Fig. **9** illustrate a washer **6** constructed to keep push button **2** in an angular position to prevent pulling on cable **4.** An upright member **13,** shown in Fig. **9** engages into a cutout **41** of the push button **2** to keep the angular position of the push button **2** the same and a cut-out **12** provides space for passing the cable **4** inside the handpiece. The transponder antenna **21** is oriented to face the reader antenna **22** such that there is no large empty opening in the center, making them cheaper to produce than the cost of producing antennas with coil windings that create a central opening.

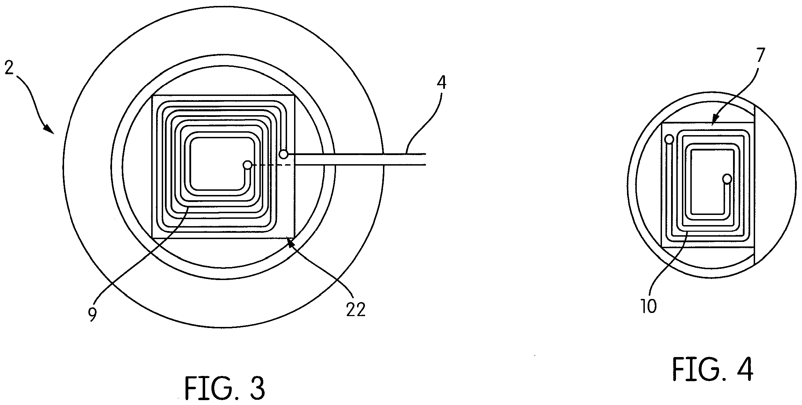

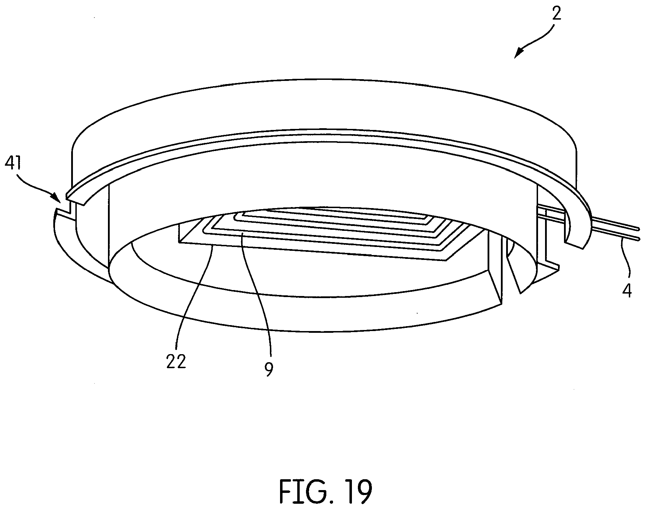

As shown in Figs. **3** and **4****,** the reader integrated antenna coil/metal **9** and the transponder integrated antenna coil/metal **10,** hereinafter referred to as antenna coil, may be disposed on a silicon wafer or on a printed circuit board (PCB). The silicon wafer allows the creation of small sized antenna structures having a large number of turns. In an embodiment herein, the antenna coils are printed onto a substrate. Fig. 19 shows a perspective view of the push button **2** of Fig. 3 with a cutout on the right to hold the upright member **13** and another cutout on the left to accommodate the cables **4** from the reader antenna **22** having reader antenna coils **9.**

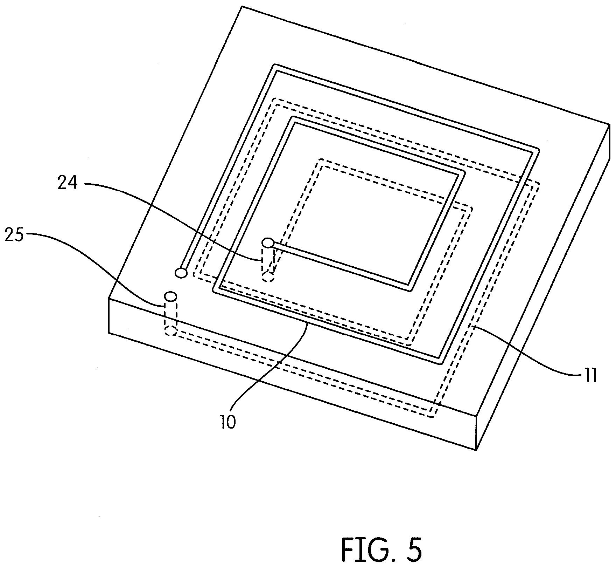

Disposing the antenna coils **10** and **11** on both sides of the wafer, as shown in Fig. **5** allows doubling the number of turns, or for a given number of turns needed, halving the wafer size. A number of coils may be between, for example, 1 and 5 coils. A number of turns may be between, for example, 30 to 100 turns. A number of turns may also be between 50 - 75 turns. In Fig. **5****,** antenna coil **10** is on a first side of the wafer and antenna coil **11** is on a second side of said wafer. Herein, a small via **24** (an electrical connection through one or more layers of an antenna), for example a laser cut hole provides a connection from coil **10** on the first side of the wafer to coil **11** on the second side of the wafer. A second via **25** that may also be laser cut provides a connection to guide the coil **11** to the first side of the wafer. Both ends of the combined antenna are on the same side of the wafer and connect directly to a memory chip that is bonded to the antenna chip. A minimum number of total turns is required to reach an appropriate transponder inductance and a target resonant frequency. In a high frequency RFID system, a resonant frequency of **13.56** MHz may be desirable in order to meet international RFID standards.

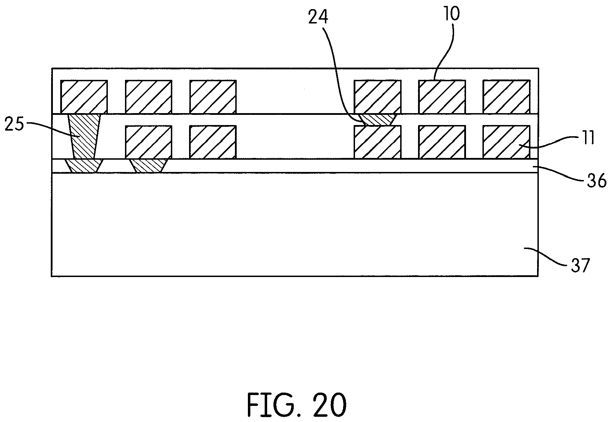

Fig. 20 shows a cross section of an example embodiment of a transponder **7.** The transponder 7 has a bottom layer transponder chip **37** and an SiO2 passivation layer **36** with two pads. The antenna coils/metal tracks **10, 11** may be surrounded by dielectric (e.g., polyamide, epoxy resin, or otherwise insulating material). Two vias **24** and **25** connect the layers and a cross-section of the antenna coils or metal tracks **10, 11** may be 10 - 20 micrometer wide and 15-30 micrometer high. In another example embodiment of the transponder **7** a footprint of the transponder antenna **21** is larger than a footprint of the chip **37.** Herein, the transponder antenna **21** may comprise a silicon substrate and two or more layers of metal tracks **10, 11, 35** surrounded by di-electric material and vias **24, 25** to connect the layers.

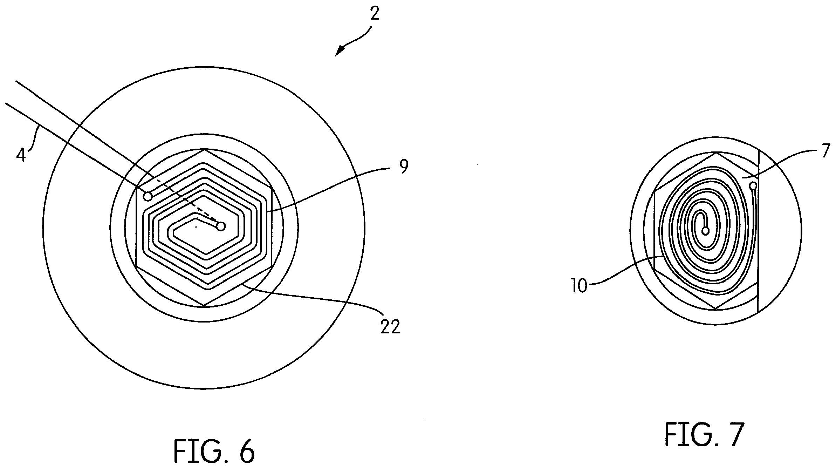

In a further exemplary embodiment herein, the substrate of an antenna may take the shape of a polygon as shown in Figs. **6** and **7** or other polygonal shape. This allows for maximization of the antenna area within the space available. It is believed that the bigger the antenna area, the longer the attainable communication distance between the transponder antenna **21** and the reader antenna **22.** In an example embodiment herein, a distance of, for example, up to 5 mm may be obtained.

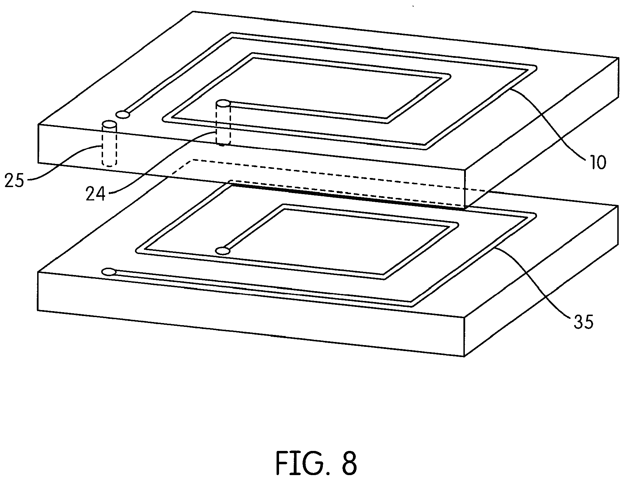

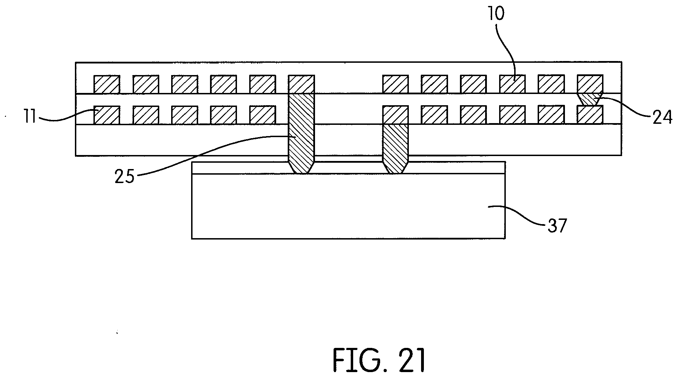

Fig. **8** shows yet another example embodiment wherein an antenna comprises at least two wafers bonded together. Herein a plurality of antenna layers **10, 11, 35** may be created on the sides of the wafers as shown in Figs. 8 and 20-21.

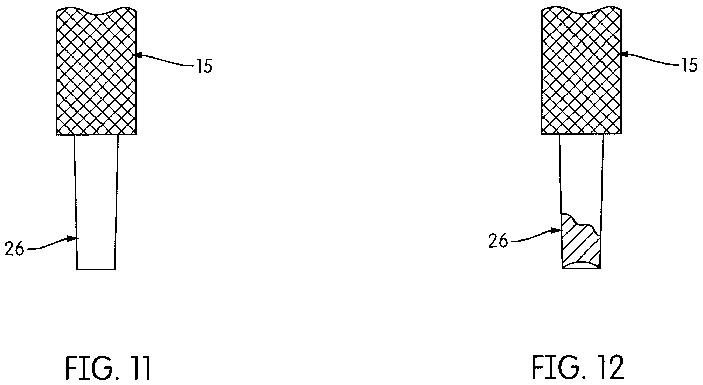

In an exemplary embodiment, a pen style reader **15** may be obtained as shown in Figs. **10****,** **11** and **12****.** The pen style reader **15** may comprise a housing containing reader electronics and a reader antenna. The reader antenna may be located at or near the tip **26** of the pen style reader **15.** The pen style reader **15** provides a mechanism to read the contents of a transponder memory **20** in a tool **8** without the need to insert the tool **8** into a handpiece **17.** This reader may also be utilized in reading through a conventional sterile barrier bag **27** as used in dental surgeries without compromising on the sterility of tools **8** in the sterile barrier bag **27.** Further, for quick and convenient scanning of one tool **8** after another, the tip **26** of the pen style reader **15,** may be convex, flat or concave shaped in an example embodiment as shown in Figs. **11** and **12****.**

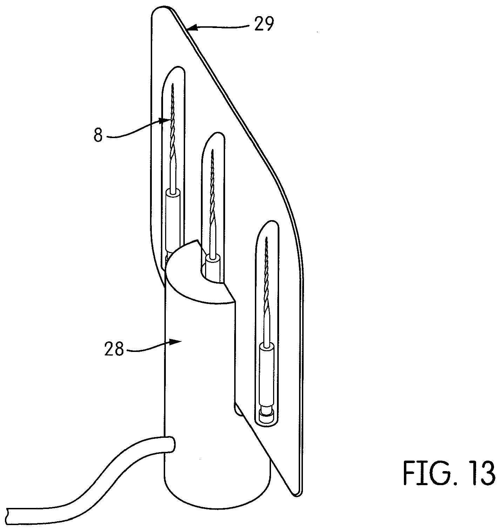

In yet another example embodiment, a table top reader **28** may be provided as shown in Fig. **13****.** The table top reader **28** may be used in a contactless scan of tools **8** (e.g. files) that are located within a packaging, for example, a thermoformed packaging **29,** without contaminating the files. The packaging may be placed upside down in the table top reader **28** such that the antenna **21** of the transponder **7** is as close as possible to a thermoformed cavity of the thermoformed packaging **29** in order to enter a communication range of the reader antenna **22.** The tools **8** in the packaging may then be scanned consecutively.

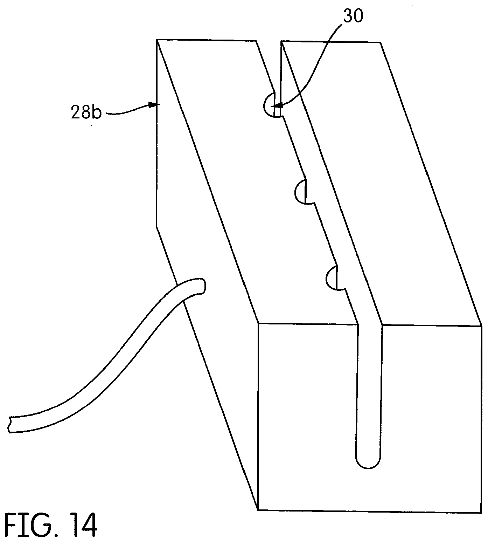

In another embodiment herein, as shown in Fig. **14****,** a table top reader **28b** having reader electronics may be provided with a plurality of slots for receiving a plurality of tools **8** within a multi-file packaging. Herein, more efficient scanning of the plurality of tools **8** may be obtained without the need or substantially without the need to move the multi-file packaging such that all files in the multi-file packaging may be scanned simultaneously. In yet another embodiment an inductive link may be used for a contactless transfer of data between a contra angle **43** of the handpiece **17** and a motor unit **42** of the handpiece **17.** Herein, signals from the reader antenna **22** may be transferred to the reader **23** in the motor unit **42** of the handpiece **17** through the inductive link comprising two coils as shown in Fig. 23. In an embodiment, the coils do not contribute to the overall length of the handpiece **17.** Herein, the inductive link may comprise a first coil **45** and a second coil **46,** with the first coil **45** wound around a drive element **44** of the motor unit **42** and the second coil wound and positioned in the contra angle **43** such that the first coil **45** may be partially or completely nested in the second coil **46.** In another embodiment, the first coil **45** may be positioned inside a circumferential groove of the drive element **44** such that an outer diameter of the first coil **45** may be smaller than an outer diameter of the drive element **44** of the motor unit **42.** This allows the protection of the coils and their polymer coating from possible damage due to handpiece **17** components contacting the first coil during use and reprocessing. In yet another embodiment, the inductive link may be used to supply power to a light source (not shown) of the handpiece **17.** A Bluetooth module **47** may also be used to establish wireless communication between the reader **23** and an external device **48** such as an iPad.

### Computer System

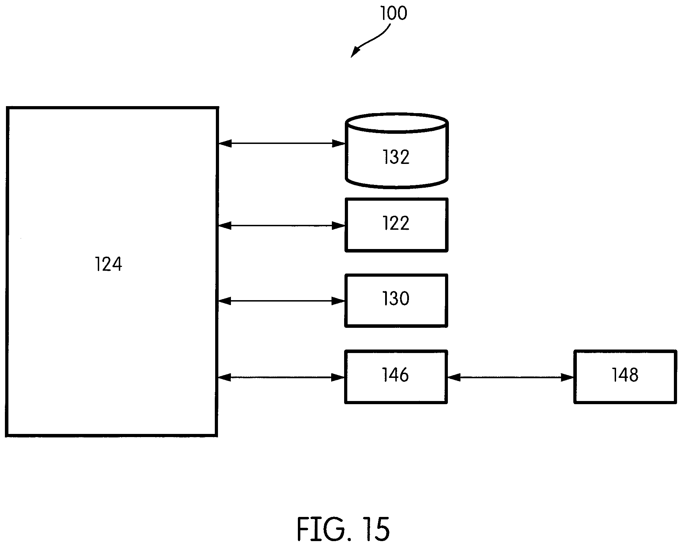

Having described an apparatus **1** for enabling communication between a tool and a handpiece through a contactless or substantially contactless interface using planar multi-layer communication antennas, reference will now be made to Fig. **15****,** which shows a block diagram of a computer system **100** that may be employed in accordance with at least some of the example embodiments herein. Although various embodiments are described herein in terms of this exemplary computer system **100,** after reading this description, it will become apparent to a person skilled in the relevant art(s) how to implement the disclosure using other computer systems and/or architectures of the dental apparatus.

The handpiece housing **31** may be adapted to receive a controller **18** comprising a memory **132** and a processor **122.** The controller **18** may be releasably attached and/or located in a port of the handpiece housing **31.** The controller **18** may also be located inside a motor unit **42** of the handpiece **17** that may be releasably connected to the handpiece housing **31.** Alternatively the controller may be located outside the handpiece **17** for connection to the reader **23** through one of various communication paths such as through a cable, a wireless interface such as Bluetooth, or any signal transmission interface such as an inductive link that is capable of transmitting and receiving signals.

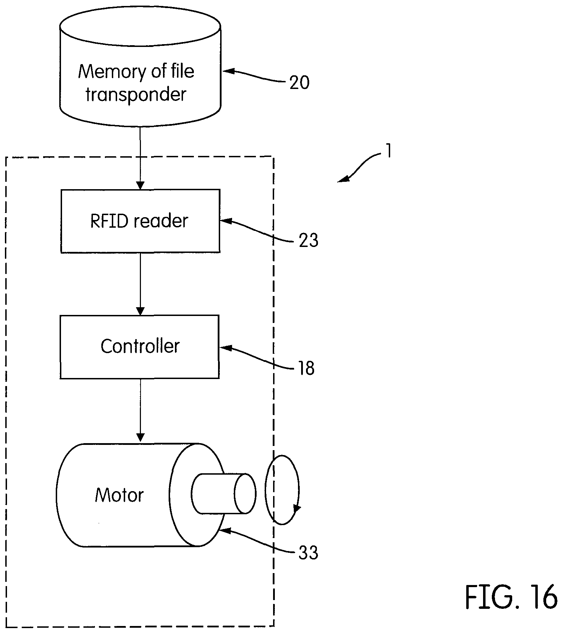

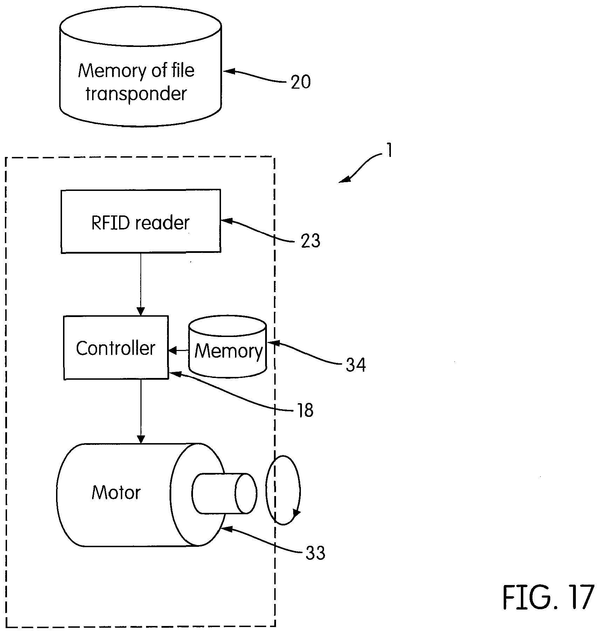

The controller may comprise one or more actuator switches and/or one of more control LEDs (not shown). The controller **18** may be form-fittingly attached to the inside of the housing **31** so that any actuator switch and/or control LED may be positioned inside the housing **31** for outside access and visibility by means of suitable recesses or windows provided in the housing. The switch may be a pressure sensor allowing the practitioner to switch the motor **33** on or off so as to allow a practitioner to interfere with the operation of the dental tool **8** during an endodontic procedure. The controller **18** includes a circuit for control of the motor **33.** Accordingly, the processor **122** may analyze pulse width modulated (PWM) signal feedback received from the motor **33** and electronically controls power supplied to the motor **33.** The housing comprises windows for providing visibility of LEDs indicating the status of the handpiece **17.** The status may relate to the handpiece operation mode, e.g. data exchange with tool ongoing, wireless connection to iPad, rotating or reciprocating mode etc. In one example embodiment herein, as shown in Fig. 16 motor settings may be automatically adjusted through communication between the handpiece **17** and the dental tool. As shown in Fig. 16, the memory of the transponder **20** may hold speed and/or torque data including maximum torque for operation of the motor **33** by the controller **18.** Other data that may be automatically monitored include, but are not limited by the number of canals treated (in conjunction with an apex locator), as well as total duration of tool use. In another embodiment as shown in Fig. 17, the memory of the transponder 20 may store the tool type or ID, and a second memory 34 in the handpiece **17** may store the speed and torque, as well as other data for each tool type wherein speed, torque and other data may be updated independently of the supply chain of tool.

In one example embodiment herein, at least some components of the computer system **100** may form or be included in the system of Fig. **1****.** The computer system **100** comprises the controller **18** which includes at least one processor **122.** The processor **122** may be connected to a communication infrastructure **124** (e.g., a communications bus).

The computer system **100** may also include an input unit **130** that may be used by a user of the computer system **100** to send information to the processor **122.** In one example embodiment herein, the input unit is an actuator switch and/or control LED. In another embodiment, the controller **18** may be electrically connected to the reader electronics. In another embodiment, the reader electronics may be part of the controller.

The processor **122** may be configured to perform part (or all) of any of the procedures described herein. For example, the processor may be configured to trigger a communication event caused by sensing an increase in signal strength due to a decrease in the separation between the transponder antenna **21** and the reader antenna **21.** To execute a procedure, the processor **122** may load the appropriate instructions, as stored on storage device, into memory **132,** and then executes the loaded instructions.

The computer system **100** also may include a communications interface **146** that enables software and data to be transferred between the computer system **100** and external devices such as an iPad. The communications interface **146** may include a network interface (e.g., a Bluetooth interface), and the like. Software and data transferred via the communications interface **146** may be in the form of signals, which may be electronic, electromagnetic, optical or another type of signal that is capable of being transmitted and/or received by the communications interface **146.** Signals may be provided to the communications interface **146** via a communications path **148** (e.g., a channel).

One or more computer programs or computer control logic may be stored in the memory **132.** The computer programs may also be received via the communications interface **146.** The computer programs include computer-executable instructions which, when executed by the computer processor **122,** cause the computer system **100** to perform the processes as described herein.

Implementation of such a hardware arrangement so as to perform the functions described herein will be apparent to persons skilled in the relevant art(s) in view of this description.

### Method for operating a dental apparatus.

Having described the computer system **100** of Fig. **15****,** the dental apparatus **1** will now be further described in conjunction with methods according to example embodiments herein for enabling communication between a tool and a handpiece through a contactless interface.

In one embodiment, a file may be inserted into the handpiece **17** and the processor **19** may be configured to retrieve file information through the reader electronics by contactless or substantially contactless communication with the file's transponder. In an example embodiment herein, the communication event may be triggered by pushing the push button **2** to cause a change in the signal strength between the reader antenna **22** and the transponder antenna **21.** The file information may include the file's serial number and the file usage data. By checking that the retrieved information matches or corresponds to predetermined criteria such as compatibility with the handpiece, cutting safety and efficacy, vibration and noise levels, number of times used, torque value, file head diameter, length of file handle, useful product life time, time to read/ write to the memory of the file etc, the inserted file may be allowed for endodontic treatment. In another embodiment, after retrieving file information, the motor settings may be automatically adjusted according to predetermined criteria such as torque speed to enable correct and safe usage.

Further, the processor may be configured to update the file usage data after every use of the file or after the motor **33** stops. It may also be configured to output the usage data through a wireless communication such as Bluetooth to an external computer such as an iPad. Moreover a pen style reader **15** may be employed to read the content of a memory chip on a file transponder through a sterile barrier packaging as shown in Fig. **10****.**

In view of the foregoing description, it may be appreciated that the example embodiments described herein provide a device, apparatus and method for enabling communication between a tool and a handpiece through a contactless interface using planar multi-layer communication antennas.

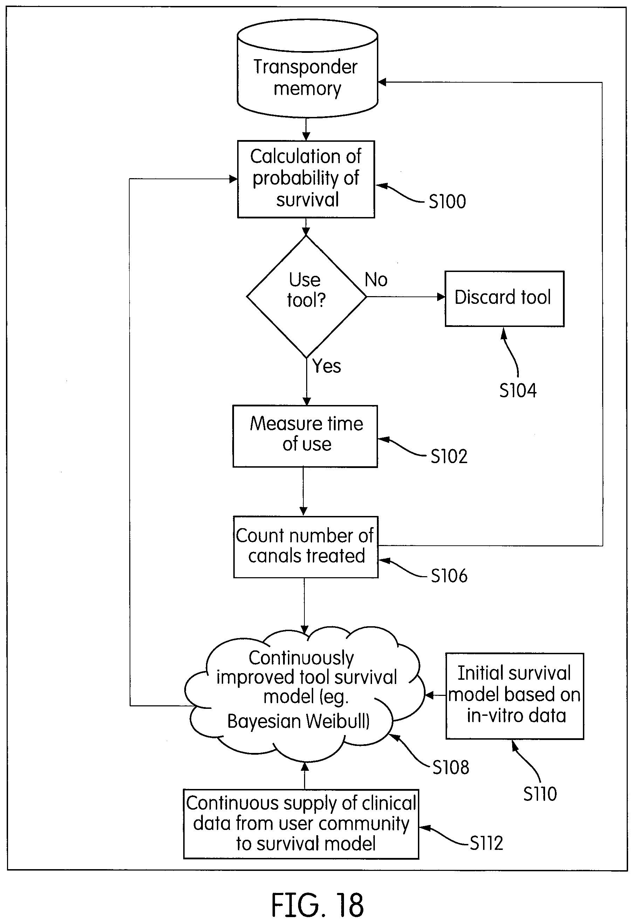

In an example embodiment herein as shown in Fig. 18, a remaining useful life of the dental tool **8** may be estimated based on a survival mode to inform a user when to discard a tool **8.** Herein after calculating a probability of survival, Step **S100,** the dental tool may be discarded, Step **S104** if the calculated probability is low. If the probability of survival is high, the treatment may be done and a time of use in the treatment is measured, Step **S102** and the number of canals treated is updated, Step **S106.** Based on an initial survival model using for example, in-vitro data as well as a continuous supply of clinical data, the survival model used in the probability calculation may be improved, Step S108 overtime.

## Claims

1. A dental tool (8) comprising;
a proximal coupling end (39);
a distal treatment end (40) opposite the proximal coupling end (39); and
a transponder (7) including a transponder antenna (21), the transponder (7) attached to or integrated with the proximal coupling end (39) of the dental tool (8),
wherein the transponder (7) is constructed such that the proximal coupling end (39) of the dental tool (8) is insertable into a tool receiving shaft of a dental handpiece (17),
wherein when the dental tool (8) is coupled with the dental handpiece (17), the transponder antenna (21) and a reader antenna (22) of the dental handpiece (17), are oriented orthogonally to an axis of rotation of the dental tool (8), such that contactless data exchange between the transponder antenna (21) and the reader antenna (22) takes place at all rotational angles of the dental tool (8),
**characterized in that**
wherein the transponder antenna (21) comprises a first substrate with antenna turns (10,11) on both sides of the first substrate which define a planar multi-layer geometry, or alternatively
wherein transponder antenna (21) comprises antenna turns (10,35; 10,11) on a plurality of substrates bonded to each other which define a planar multi-layer geometry.

2. The dental tool (8) according to Claim 1, wherein a shape of the proximal coupling end (39) of the dental tool (8) is a round or a half moon shape.

3. A dental handpiece (17) comprising:
a handheld outer housing (31);
a head (32); and
a drivable hollow shaft constructed to receive a proximal coupling end (39) of a dental tool (8), the drivable hollow shaft being arranged in the head (32) and drivable relative to an outer housing (31) of the head (32) to move the dental tool (8); and
and a reader with a reader antenna (22) disposed in the head (32) of the handpiece (17) and constructed to send and receive data about the dental tool (8),
wherein when the dental tool (8) is coupled with the dental handpiece (17), the reader antenna (22) and a transponder antenna (21) of the dental tool (8), are oriented orthogonally to an axis of rotation of the dental tool (8), such that contactless data exchange between the transponder antenna (21) and the reader antenna (22) takes place at all rotational angles of the dental tool (8).
**characterized in that**
wherein the reader antenna (22) comprises a second substrate with antenna turns (10,11) on both sides of the second substrate which define a planar multi-layer geometry, or alternatively,
wherein the reader antenna (22) comprises antenna turns (10,35;10,11) on a plurality substrates bonded to each other which define a planar multi-layer geometry.

4. The dental handpiece (17) according to Claim 3, further comprising an inductive link constructed to transfer data between the reader and the reader antenna (22).

5. The dental handpiece (17) according to Claim 4, wherein the inductive link comprises: a first coil (45) and a second coil (46), and
wherein the first coil (45) is wound around a drive element (44) of a motor unit (42) of the dental handpiece (17) and the second coil (46) is wound and positioned in a contra angle member (43) of the handpiece (17) such that the first coil (45) is nested in the second coil (46) when the contra angle member engages the drive element (44).

6. The dental handpiece (17) according to Claim 5, wherein the first coil (45) is positioned inside a circumferential groove of the drive element (44) such that an outer diameter of the first coil (45) is smaller than an outer diameter of the drive element (44).

7. The dental handpiece (17) according to Claim 3,
wherein the reader antenna (22) is attached to a tool facing part of a push button of the handpiece (17) and,
wherein the push button is maintained in a predetermined angular position using a washer (6) with a member (13) for restricting movements of the push button.

8. A system (100) for operating a dental handpiece (17) of Claim 3, the system (100) comprising: a dental tool (8) according to any of the claims 1-2;
a dental handpiece (17) according to any of the claims 3-7;
at least one processor (122) operable to: trigger a communication event between the transponder antenna (21) of the dental tool (8) and the reader antenna (22) to retrieve information about the dental tool (8).

9. The system (100) according to Claim 8, wherein the at least one processor (122) being operable to: checking that the retrieved information matches or corresponds to predetermined criteria, wherein the triggering comprises (i) changing a communication signal strength between the transponder antenna (21) and the reader antenna (22), said changing being caused by a reduction of the distance between the transponder antenna (21) and the reader antenna (22) or (ii) sending a transponder awakening signal from the reader antenna (22).

10. The system (100) according to Claim 9, wherein the at least one processor (122) being operable to: automating the adjustment of motor settings of the dental handpiece (17) based on the retrieved information about the dental tool (8).

## Patentansprüche

1. Zahnärztliches Werkzeug (8), umfassend;
ein proximales Kopplungsende (39);
ein distales Behandlungsende (40) gegenüber dem proximalen Kopplungsende (39); und
einen Transponder (7), der eine Transponderantenne (21) einschließt, wobei der Transponder (7) am proximalen Kopplungsende (39) des zahnärztlichen Werkzeugs (8) angebracht oder darin integriert ist,
wobei der Transponder (7) so konstruiert ist, dass das proximale Kopplungsende (39) des zahnärztlichen Werkzeugs (8) in einen Werkzeugaufnahmeschaft eines zahnärztlichen Handstücks (17) einführbar ist,
wobei, wenn das zahnärztliche Werkzeug (8) mit dem zahnärztlichen Handstück (17) gekoppelt ist, die Transponderantenne (21) und eine Leseantenne (22) des zahnärztlichen Handstücks (17) orthogonal zu einer Drehachse des zahnärztlichen Werkzeugs (8) so ausgerichtet sind, dass bei allen Drehwinkeln des zahnärztlichen Werkzeugs (8) ein berührungsloser Datenaustausch zwischen der Transponderantenne (21) und der Leseantenne (22) stattfindet,
**dadurch gekennzeichnet, dass**
wobei die Transponderantenne (21) ein erstes Substrat mit Antennenwindungen (10,11) auf beiden Seiten des ersten Substrats umfasst, die eine planare Mehrschichtgeometrie definieren, oder alternativ
wobei die Transponderantenne (21) Antennenwindungen (10,35; 10,11) auf einer Mehrzahl von miteinander verbundenen Substraten umfasst, die eine planare Mehrschichtgeometrie definieren.

2. Zahnärztliches Werkzeug (8) nach Anspruch 1, wobei eine Form des proximalen Kopplungsendes (39) des zahnärztlichen Werkzeugs (8) eine runde oder eine Halbmondform ist.

3. Zahnärztliches Handstück (17), umfassend:
ein tragbares äußeres Gehäuse (31);
einen Kopf (32); und
eine antreibbare Hohlwelle, die konstruiert ist, um ein proximales Kopplungsende (39) eines zahnärztlichen Werkzeugs (8) aufzunehmen, wobei die antreibbare Hohlwelle im Kopf (32) angeordnet und relativ zu einem äußeren Gehäuse (31) des Kopfes (32) antreibbar ist, um das zahnärztliche Werkzeug (8) zu bewegen; und
und ein Lesegerät mit einer Leseantenne (22), die im Kopf (32) des Handstücks (17) angeordnet und konstruiert ist, um Daten über das zahnärztliche Werkzeug (8) zu senden und zu empfangen,
wobei, wenn das zahnärztliche Werkzeug (8) mit dem zahnärztlichen Handstück (17) gekoppelt ist, die Leseantenne (22) und eine Transponderantenne (21) des zahnärztlichen Werkzeugs (8) orthogonal zu einer Drehachse des zahnärztlichen Werkzeugs (8) so ausgerichtet sind, dass ein berührungsloser Datenaustausch zwischen der Transponderantenne (21) und der Leseantenne (22) bei allen Drehwinkeln des zahnärztlichen Werkzeugs (8) stattfindet.
**dadurch gekennzeichnet, dass**
wobei die Leseantenne (22) ein erstes Substrat mit Antennenwindungen (10,11) auf beiden Seiten des zweiten Substrats umfasst, die eine planare Mehrschichtgeometrie definieren, oder alternativ,
wobei die Leseantenne (22) Antennenwindungen (10,35; 10,11) auf einer Mehrzahl von miteinander verbundenen Substraten umfasst, die eine planare Mehrschichtgeometrie definieren.

4. Zahnärztliches Handstück (17) nach Anspruch 3, das ferner eine induktive Verbindung umfasst, die so konstruiert ist, dass sie Daten zwischen dem Lesegerät und der Leseantenne (22) überträgt.

5. Zahnärztliches Handstück (17) nach Anspruch 4, wobei die induktive Verbindung umfasst: eine erste Spule (45) und eine zweite Spule (46), und
wobei die erste Spule (45) um ein Antriebselement (44) einer Motoreinheit (42) des zahnärztlichen Handstücks (17) gewickelt ist und die zweite Spule (46) in einem Winkelstück (43) des Handstücks (17) gewickelt und so positioniert ist, dass die erste Spule (45) in der zweiten Spule (46) verschachtelt ist, wenn das Winkelstück das Antriebselement (44) in Eingriff nimmt.

6. Zahnärztliches Handstück (17) nach Anspruch 5, wobei die erste Spule (45) innerhalb einer Umfangsnut des Antriebselements (44) so positioniert ist, dass ein Außendurchmesser der ersten Spule (45) kleiner als ein Außendurchmesser des Antriebselements (44) ist.

7. Zahnärztliches Handstück (17) nach Anspruch 3,
wobei die Leseantenne (22) an einem dem Werkzeug zugewandten Teil eines Druckknopfs des Handstücks (17) befestigt ist und
wobei der Druckknopf unter Verwendung einer Unterlegscheibe (6) in einer vorbestimmten Winkelposition mit einem Element (13) zum Beschränken von Bewegungen des Druckknopfs gehalten wird.

8. System (100) zum Betreiben eines zahnärztlichen Handstücks (17) nach Anspruch 3, das System (100) umfassend:
ein zahnärztliches Werkzeug (8) nach einem der Ansprüche 1-2;
ein zahnärztliches Handstück (17) nach einem der Ansprüche 3-7;
mindestens einen Prozessor (122), betreibbar zum: Auslösen eines Kommunikationsereignisses zwischen der Transponderantenne (21) des zahnärztlichen Werkzeugs (8) und der Leseantenne (22), um Informationen über das zahnärztliche Werkzeug (8) abzurufen.

9. System (100) nach Anspruch 8, wobei der mindestens eine Prozessor (122) betreibbar ist zum: Prüfen, ob die abgerufenen Informationen mit vorbestimmten Kriterien übereinstimmen oder diesen entsprechen, wobei das Auslösen umfasst: (i) Ändern einer Kommunikationssignalstärke zwischen der Transponderantenne (21) und der Leseantenne (22), wobei die genannte Änderung durch eine Verringerung des Abstands zwischen der Transponderantenne (21) und der Leseantenne (22) verursacht wird, oder (ii) Senden eines Transponder-Wecksignals von der Leseantenne (22).

10. System (100) nach Anspruch 9, wobei der mindestens eine Prozessor (122) betreibbar ist zum: Automatisieren der Einstellung von Motoreinstellungen des zahnärztlichen Handstücks (17) basierend auf den abgerufenen Informationen über das zahnärztliche Werkzeug (8).

## Revendications

1. Outil dentaire (8) comprenant ;
une extrémité de couplage proximale (39) ;
une extrémité de traitement distale (40) opposée à l'extrémité de couplage proximale (39) ; et
un transpondeur (7) incluant une antenne de transpondeur (21), le transpondeur (7) étant fixé ou intégré à l'extrémité de couplage proximale (39) de l'outil dentaire (8),
le transpondeur (7) étant conçu de sorte que l'extrémité de couplage proximale (39) de l'outil dentaire (8) puisse être insérée dans un arbre de réception d'outil d'une pièce à main dentaire (17),
lorsque l'outil dentaire (8) est couplé à la pièce à main dentaire (17), l'antenne de transpondeur (21) et une antenne de lecteur (22) de la pièce à main dentaire (17) étant orientées orthogonalement à un axe de rotation de l'outil dentaire (8), de sorte qu'un échange de données sans contact entre l'antenne de transpondeur (21) et l'antenne de lecteur (22) s'effectue à tous les angles de rotation de l'outil dentaire (8),
**caractérisé en ce que**
l'antenne de transpondeur (21) comprend un premier substrat avec des spires d'antenne (10, 11) sur les deux côtés du premier substrat qui définissent une géométrie multicouche plane ou, en variante
l'antenne de transpondeur (21) comprend des spires d'antenne (10, 35 ; 10, 11) sur une pluralité de substrats liés les uns aux autres qui définissent une géométrie multicouche plane.

2. Outil dentaire (8) selon la revendication 1, dans lequel une forme de l'extrémité de couplage proximale (39) de l'outil dentaire (8) est une forme ronde ou en demi-lune.

3. Pièce à main dentaire (17) comprenant :
un boîtier externe portatif (31) ;
une tête (32) ; et
un arbre creux pouvant être entraîné, conçu pour recevoir une extrémité de couplage proximale (39) d'un outil dentaire (8), l'arbre creux pouvant être entraîné étant agencé dans la tête (32) et pouvant être entraîné par rapport à un boîtier externe (31) de la tête (32) pour déplacer l'outil dentaire (8) ; et
et un lecteur avec une antenne de lecteur (22) disposée dans la tête (32) de la pièce à main (17) et conçue pour envoyer et recevoir des données concernant l'outil dentaire (8),
lorsque l'outil dentaire (8) est couplé à la pièce à main dentaire (17), l'antenne de lecteur (22) et une antenne de transpondeur (21) de l'outil dentaire (8) étant orientées orthogonalement à un axe de rotation de l'outil dentaire (8), de sorte qu'un échange de données sans contact entre l'antenne transpondeur (21) et l'antenne de lecteur (22) s'effectue à tous les angles de rotation de l'outil dentaire (8).
**caractérisée en ce que**
l'antenne de lecteur (22) comprend un second substrat avec des spires d'antenne (10, 11) sur les deux côtés du second substrat qui définissent une géométrie multicouche plane ou, en variante,
l'antenne de lecteur (22) comprend des spires d'antenne (10, 35 ; 10, 11) sur une pluralité de substrats liés les uns aux autres qui définissent une géométrie multicouche plane.

4. Pièce à main dentaire (17) selon la revendication 3, comprenant en outre une liaison inductive conçue pour transférer des données entre le lecteur et l'antenne de lecteur (22).

5. Pièce à main dentaire (17) selon la revendication 4, dans laquelle la liaison inductive comprend : une première bobine (45) et une seconde bobine (46) et
dans laquelle la première bobine (45) est enroulée autour d'un élément d'entraînement (44) d'une unité moteur (42) de la pièce à main dentaire (17) et la seconde bobine (46) est enroulée et positionnée dans un élément de contre-angle (43) de la pièce à main (17) de sorte que la première bobine (45) soit emboîtée dans la seconde bobine (46) lorsque l'élément de contre-angle vient en prise avec l'élément d'entraînement (44).

6. Pièce à main dentaire (17) selon la revendication 5, dans laquelle la première bobine (45) est positionnée à l'intérieur d'une rainure circonférentielle de l'élément d'entraînement (44) de sorte qu'un diamètre externe de la première bobine (45) soit inférieur à un diamètre externe de l'élément d'entraînement (44).

7. Pièce à main dentaire (17) selon la revendication 3,
dans laquelle l'antenne de lecteur (22) est fixée à un outil faisant face à une partie d'un bouton poussoir de la pièce à main (17) et,
dans laquelle le bouton poussoir est maintenu dans une position angulaire prédéfinie à l'aide d'une rondelle (6) avec un élément (13) pour limiter les mouvements du bouton poussoir.

8. Système (100) pour faire fonctionner une pièce à main dentaire (17) selon la revendication 3, le système (100) comprenant :
un outil dentaire (8) selon l'une quelconque des revendications 1 ou 2 ;
une pièce à main dentaire (17) selon l'une quelconque des revendications 3 à 7 ;
au moins un processeur (122) pouvant fonctionner pour: déclencher un événement de communication entre l'antenne de transpondeur (21) de l'outil dentaire (8) et l'antenne de lecteur (22) pour récupérer des informations concernant l'outil dentaire (8).

9. Système (100) selon la revendication 8, dans lequel l'au moins un processeur (122) peut fonctionner pour : vérifier que les informations récupérées correspondent à des critères prédéfinis, dans lequel le déclenchement comprend (i) la modification d'une force de signal de communication entre l'antenne de transpondeur (21) et l'antenne de lecteur (22), ladite modification étant provoquée par une réduction de la distance entre l'antenne de transpondeur (21) et l'antenne de lecteur (22) ou (ii) l'envoi d'un signal de réveil du transpondeur depuis l'antenne de lecteur (22).

10. Système (100) selon la revendication 9, dans lequel l'au moins un processeur (122) peut fonctionner pour : automatiser le réglage des paramètres du moteur de la pièce à main dentaire (17) sur la base des informations récupérées concernant l'outil dentaire (8).
